# EUROPÄISCHE PATENTANMELDUNG

(11) **EP 3 800 726 A1**
(43) Veröffentlichungstag der Anmeldung: **07.04.2021**
(21) Anmeldenummer: 20209548.5
(22) Anmeldetag: 09.11.2017
(51) Int. Cl.: H01M 10/42, H01M 10/44, H01M 10/46, H01M 10/48

(54) **KONFIGURIERBARES AKKUPACK**

(30) Priorität: 15.12.2016 DE 102016124501
(62) Teilanmeldung aus: 17200787.4
(71) Anmelder: Metabowerke GmbH, 72622 Nürtingen (DE)
(72) Erfinder: Stickel, Wolfgang, 72660 Beuren (DE)
(74) Vertreter: Markfort, Iris-Anne Lucie

(57) **Zusammenfassung**

Die Erfindung betrifft ein konfigurierbares Akkupack (1), umfassend ein integriertes Batterie-Management-System (2) sowie eine Datenschnittstelle (3) und eine Benutzerschnittstelle (4), wobei das Batterie-Management-System (2) einen Datenspeicher (5) zum Speichern wenigstens eines Akkuladeparameters (U_{LS}) aufweist und an der Datenschnittstelle (3) den wenigstens einen Akkuladeparameter (U_{LS}) für ein externes Ladegerät zur Verfügung stellt, und wobei der wenigstens eine Akkuladeparameter (U_{LS}) über eine Eingabe an die Benutzerschnittstelle (4) konfigurierbar ist.

## Beschreibung

Die Erfindung betrifft ein konfigurierbares Akkupack, umfassend ein integriertes Batterie-Management-System sowie eine Datenschnittstelle und eine Benutzerschnittstelle. Die Erfindung betrifft auch ein Verfahren zur Konfiguration eines derartigen Akkupacks sowie ein System, bestehend aus einem derartigen Akkupack und einem externen Ladegerät für das Akkupack. Außerdem betrifft die Erfindung eine vorteilhafte Verwendung eines Akkupacks.

Mit einem Akkupack ist sowohl ein Akkumulator mit einer einzelnen Akkumulatorzelle (auch Sekundärzelle genannt), als auch ein zusammengeschaltetes Paket mit mehreren Akkumulatorzellen gemeint. Mit einem Akkupack kann auch ein Speicher für elektrische Energie gemeint sein, der nicht oder nicht ausschließlich elektrochemisch aufgebaut ist, also zum Beispiel ein Kondensator.

Akkumulatoren bzw. Akkupacks sind hinlänglich bekannt und werden im Stand der Technik als Stromquellen für eine Vielzahl von Anwendungen eingesetzt.

Im Zuge der stetigen Weiterentwicklung der Akkumulatoren ist die nutzbare Gesamtkapazität bzw. Energiedichte eines Akkupacks heutzutage mitunter derart hoch, dass bei Transport, Lagerung und Handhabung der Akkupacks teilweise besondere Sicherheitsmaßnahmen ergriffen werden müssen. Gleichzeitig ist es aus Gründen der Wirtschaftlichkeit meist notwendig, insbesondere Transport und Lagerung von solchen "Hochleistungsakkupacks" (z. B. Akkupacks mit einer Gesamtkapazität von ≥ 100 Wattstunden) oder von elektrischen Einrichtungen, die derartige Akkupacks umfassen, möglichst unkompliziert zu gestalten.

Zur Lösung dieses Problems ist es bekannt, Akkuzellen innerhalb von Akkupacks oder auch mehrere Akkupacks erst dann elektrisch zusammenzuschalten, wenn der/die Akkupacks in Betrieb genommen werden sollen. Somit kann ein gefahrloser Transport bzw. eine gefahrlose Lagerung der Akkupacks oder elektrischen Einrichtungen mit den Akkupacks möglich sein, wobei gleichzeitig im Betrieb eine hohe nutzbare Gesamtkapazität als Summe der verschalteten Einzelkapazitäten zur Verfügung gestellt werden kann.

Ein derartiges Akkupack ist beispielsweise aus der DE 20 2015 106 271 U1 bekannt. Das Akkupack mit schaltbarer Gesamtkapazität zur Versorgung eines mobilen elektrischen Geräts mit elektrischer Energie weist zumindest zwei getrennte Zellenpacks mit elektrischen Anschlüssen auf, wobei die elektrischen Anschlüsse der Zellenpacks erst durch Einsetzen des Akkupacks in das Gerät und/oder durch elektrische Verbindung des Akkupacks mit dem Gerät zur Erzeugung der Gesamtkapazität elektrisch zusammenschaltbar sind. In der DE 20 2015 106 271 U1 ist weiter vorgesehen, dass zumindest ein Schaltelement zum internen Verschalten der elektrischen Anschlüsse der Zellenpacks angeordnet ist und dass das zumindest eine Schaltelement durch Einsetzen des Akkupacks in das Gerät und/oder durch elektrische Verbindung mit dem Gerät schaltbar ist.

Obwohl der Transport und die Lagerung eines derartigen Akkupacks grundsätzlich sicherer ist, da die Zellenpacks zunächst getrennt voneinander vorliegen und die nutzbare Gesamtkapazität des Akkupacks bei Transport und Lagerung somit noch verhältnismäßig gering ist, besteht immer noch ein gewisses Risiko, da die gespeicherte Energiemenge der zunächst noch getrennten Zellenpacks in der Summe dennoch hoch ist und bei einem (schweren) Transportschaden somit gegebenenfalls immer noch Gefahr von dem oder den Akkupack(s) ausgehen kann.

Eine weitere Möglichkeit, die Sicherheit von Akkupacks zu erhöhen, ist beispielsweise in der WO 2016/131802 A1 beschrieben. In der WO 2016/131802A1 wird ein Schaltelement beschrieben, welches mittels einer Steuereinheit in einen Schaltzustand überführt werden kann, in welchem eine elektrisch leitende Verbindung zwischen einem Ableiter des galvanischen Elements einer Batteriezelle und zumindest einem der Anschlüsse der Batterie unterbrochen ist. Die bedarfsweise Stromunterbrechung soll, insbesondere bei einem externen Kurzschluss, einem erhöhtem Innendruck in dem Batteriezellengehäuse oder bei einem Überladen einer der Batteriezellen die Sicherheit bei der Handhabung der Batterie gewährleisten. Trotz des beschriebenen Schaltelements verbleibt jedoch noch ein nicht zu vernachlässigendes Restrisiko, insbesondere bei Transport und Lagerung der Batterie, da die gespeicherte Energiemenge nach wie vor groß ist. Bei einem Versagen des Schaltelements oder bei einem schweren Schaden an der Batterie kann somit von der Batterie nach wie vor eine hohe Gefahr ausgehen.

Es wäre somit grundsätzlich vorzuziehen, die in der Summe gespeicherte Energiemenge der Akkupacks während Transport und Lagerung zu begrenzen.

Mittlerweile sind Ladegeräte für Akkupacks bekannt geworden, bei denen ein gewünschter Ladezustand als Kriterium zum Beenden des Ladevorgangs vorgegeben werden kann. Ein derartiges Ladegerät ist beispielsweise aus der WO 2010/060400 A2 bekannt. Das Laden eines Akkupacks auf beispielsweise nur 80 % der Gesamtkapazität ist auch in Anbetracht der Lebensdauer der Akkupacks vorteilhaft, da es bekannt ist, dass sich die Lebensdauer von Akkupacks erhöht, wenn diese nicht immer vollständig aufgeladen werden.

Obwohl sich somit beim Ladevorgang durch das Ladegerät die Energiemenge, die in das Akkupacks eingespeist wird, begrenzen bzw. vorgeben lässt, kann dennoch nicht garantiert werden, dass ein Benutzer oder ein Hersteller die Akkupacks auch tatsächlich nur bis zu einer als sicher geltenden Ladegrenze auflädt. Demnach sind auch die gesetzlichen Vorschriften betreffend den Gefahrguttransport nur abhängig von der nutzbaren Gesamtkapazität des Akkupacks und nicht vom tatsächlichen Ladezustand.

Zum weiteren, allgemeinen Hintergrund wird noch auf die Druckschriften DE 20 2013 103 445 U1 und US 2016/197337 A1 verwiesen.

Die DE 20 2013 103 445 U1 betrifft einen Akkumulator, insbesondere für einen elektrischen Antrieb, mit zwei Leistungsanschlüssen, einem Haupt-Energiespeicher mit zwei Spannungspolen, welche jeweils mit einem Leistungsanschluss über eine Anschlussleitung elektrisch verbunden sind, einer Logikeinrichtung, einer Kommunikationseinrichtung und einer von der Logikeinrichtung ansteuerbaren Schalteinrichtung. Die Schalteinrichtung kann einen Ladesperrungs-Schaltzustand einnehmen, in welchem ein Stromfluss in einer Lade-Richtung zum Aufladen des Haupt-Energiespeichers verhindert und ein Stromfluss in Entlade-Richtung zum Entladen des Haupt-Energiespeichers erlaubt wird.

Die US 2016/197337 A1 betrifft eine wiederaufladbare Batterie mit mehreren Batteriezellen, verschiedenen Schnittstellen und einem Datenspeicher, in dem steuerungsrelevante Parameter für die interne Verwendung mit einem Steuerungsmodul der Batterie abgelegt sein können.

Der vorliegenden Erfindung liegt die Aufgabe zugrunde, ein konfigurierbares Akkupack bereitzustellen, das einen sicheren Transport und eine sichere Lagerung zulässt und gleichzeitig flexibel einsetzbar ist.

Diese Aufgabe wird für das konfigurierbare Akkupack mit den in Anspruch 1 aufgeführten Merkmalen gelöst. Hinsichtlich eines vorteilhaften Verfahrens wird die Aufgabe durch die Merkmale des Anspruchs 9 gelöst. Ferner wird die Aufgabe durch ein System gemäß Anspruch 14 und im Hinblick auf eine vorteilhafte Verwendung durch Anspruch 15 gelöst. Die abhängigen Ansprüche und die nachfolgend beschriebenen Merkmale betreffen vorteilhafte Ausführungsformen und Varianten der Erfindung. Das konfigurierbare Akkupack umfasst ein integriertes Batterie-Management-System (BMS) sowie eine Datenschnittstelle und eine Benutzerschnittstelle.

Ein Batterie-Management-System dient insbesondere der Überwachung und Regelung eines Akkupacks und wird teilweise auch als Power-Management-System (PMS) bezeichnet.

Vorliegend weist das Batterie-Management-System einen Datenspeicher zum Speichern wenigstens eines Akkuladeparameters auf, wobei der oder die Akkuladeparameter an der Datenschnittstelle für ein externes Ladegerät zur Verfügung gestellt wird bzw. werden. Erfindungsgemäß ist vorgesehen, dass der wenigstens eine Akkuladeparameter über eine Eingabe an die Benutzerschnittstelle konfigurierbar ist.

Dadurch, dass der wenigstens eine Akkuladeparameter über die Benutzerschnittstelle konfigurierbar ist, ist es möglich, ein standardisiertes Hochleistungsakkupack in Massenproduktion herzustellen, das anschließend flexibel konfigurierbar ist. Das Ackupack kann von einem Benutzer, der vorzugsweise ein Endabnehmer oder ein Unternehmen, beispielsweise ein Hersteller des Akkupacks, sein kann, konfigurierbar sein. Es ist somit möglich, bei gleichbleibender Hardware bzw. gleichbleibendem Aufbau über rein softwaretechnische Maßnahmen Parameter des Akkupacks einzustellen.

Die Herstellung eines derartigen Akkupacks kann wirtschaftlich vorteilhaft sein, da hohe Stückzahlen eines einzigen Akkupacktyps hergestellt werden können, die im Nachhinein in einfachster Weise flexibel anpassbar sind.

Das Batterie-Management-System kann beliebige elektrische Schaltungen umfassen. Vorzugsweise kann ein Mikrocontroller vorgesehen sein, der mit dem Datenspeicher elektrisch verbunden ist oder selbst einen Datenspeicher aufweist.

Mit einem Datenspeicher kann insbesondere ein semi-permanenter Speicher, d. h. ein nicht flüchtiger Speicher, dessen Informationen im Betrieb veränderbar sind, vorgesehen sein. Beispielsweise kann ein EPROM, EEPROM, Flash-EEPROM, FRAM oder MRAM-Speicher vorgesehen sein.

Mit einer Datenschnittstelle kann eine analoge Datenschnittstelle und/oder eine digitale Datenschnittstelle gemeint sein. Dabei kann insbesondere auch ein Bussystem vorgesehen sein, wobei mehrere Daten seriell und/oder parallel über die Datenschnittstelle übertragbar sind. Es kann auch vorgesehen sein, dass sich die Datenschnittstelle aus mehreren Einzelschnittstellen zusammensetzt.

Es können auch mehrere Benutzerschnittstellen vorgesehen sein, beispielsweise zwei oder drei. Die Erfindung ist nicht auf die Verwendung einer einzigen Benutzerschnittstelle beschränkt zu verstehen.

Damit, dass das Batterie-Management-System an der Datenschnittstelle den wenigstens einen Akkuladeparameter für ein externes Ladegerät zur Verfügung stellt, kann gemeint sein, dass das Batterie-Management-System den wenigstens einen Akkuladeparameter permanent an der Datenschnittstelle zur Verfügung stellt, periodisch zur Verfügung stellt oder auf Anforderung - beispielsweise durch das externe Ladegerät - zur Verfügung stellt.

Bei Vorhandensein von mehr als einem Akkuladeparameter kann insbesondere vorgesehen sein, dass das Batterie-Management-System nur eine Auswahl der Akkuladeparameter für das externe Ladegerät an der Datenschnittstelle zur Verfügung stellt. Beispielsweise kann vorgesehen sein, dass nur einer der Akkuladeparameter für das externe Ladegerät zur Verfügung gestellt wird.

Es kann auch vorgesehen sein, dass der oder die Akkuladeparameter sequentiell, d. h. in zeitlicher Abfolge, für das externe Ladegerät zur Verfügung gestellt wird bzw. werden.

Damit, dass der wenigstens eine Akkuladeparameter über eine Eingabe an die Benutzerschnittstelle konfigurierbar ist, kann gemeint sein, dass ein Benutzer den wenigstens einen Akkuladeparameter beliebig einstellen kann. Es kann aber auch vorgesehen sein, dass der Benutzer den wenigstens eine Akkuladeparameter in Stufen, also zum Beispiel aus einer vordefinierten Tabelle, auswählt und somit konfiguriert.

Es kann insbesondere vorgesehen sein, dass der Benutzer bei Verwendung mehrerer Akkuladeparameter nicht alle Akkuladeparameter, sondern nur eine Auswahl, beispielsweise auch nur einen Akkuladeparameter, konfiguriert.

Die Konfiguration des wenigstens einen Akkuladeparameters kann in digitaler, analoger oder gemischter Form erfolgen. Somit kann beispielsweise das Batterie-Management-System oder Teile davon analog und/oder digital ausgebildet sein. Selbiges gilt für die Benutzerschnittstelle und den Datenspeicher.

In einer besonders bevorzugten Ausführung kann vorgesehen sein, dass über die Eingabe an die Benutzerschnittstelle eine nutzbare Gesamtkapazität des Akkupacks konfigurierbar ist.

Mit einer nutzbaren Gesamtkapazität ist eine Kapazität gemeint, die nicht zwingend der hardwaretechnisch erreichbaren Gesamtkapazität des Akkupacks entspricht. Die nutzbare Gesamtkapazität kann durch die Konfiguration des Benutzers kleiner oder gleich der hardwaretechnisch erreichbaren Gesamtkapazität des Akkupacks sein.

Dadurch, dass die nutzbare Gesamtkapazität des Akkupacks flexibel konfigurierbar ist, kann sichergestellt werden, dass selbst ein "Hochleistungsakkupack" aufgrund der gegebenenfalls beschränkten Gesamtkapazität gefahrlos transportiert und gelagert werden kann. Erst später, wenn das Akkupack verwendet werden soll, kann das Akkupack gegebenenfalls wieder umkonfiguriert werden, wodurch die tatsächliche Gesamtkapazität des Akkupacks nutzbar wird.

Insbesondere kann vorgesehen sein, dass das Akkupack ein Lithium-Ionen-Akkupack ist.

Es ist bekannt, dass insbesondere Lithium-Ionen-Akkupacks aufgrund ihrer hohen Energiedichte gefährlich in der Handhabung sind. Aufgrund dessen ist die Erfindung insbesondere für derartige Akkupacks vorteilhaft.

Bei dem erfindungsgemäßen Akkupack kann es sich aber selbstverständlich auch um einen Nickel-Metall-Hybrid-Akkumulator, Nickel-Kadmium-Akkumulator oder Bleiakkumulator handeln. Grundsätzlich ist die Erfindung nicht auf einen bestimmten Typ Akkupack begrenzt zu verstehen.

Es ist ein weiterer Vorteil der Erfindung, dass ein grundsätzlich als Hochleistungsackupack hergestelltes Akkupack durch entsprechende Konfiguration auch mit einer geringeren nutzbaren Gesamtkapazität in den Handel gebracht werden kann. Es kann auch vorgesehen sein, dass ein Benutzer selbst entscheidet, ob er ein Akkupack als Hochleistungsakkupack, d. h. mit sehr großer Kapazität, oder als langlebiges Akkupack, d. h. also zum Beispiel mit nur 80 % seiner hardwareseitig maximalen Kapazität, betreiben möchte.

Ein weiterer Vorteil eines vorzeitigen Abbrechens des Ladevorgangs kann eine geringere Erwärmung des Akkupacks und des externen Ladegeräts sein. Insbesondere kann vorgesehen sein, dass die Akkuladeparameter, die an der Datenschnittstelle zur Verfügung stehen, eine Kennlinie eines Ladeverfahrens beeinflussen und/oder das Ladeverfahren festlegen.

Es ist bekannt, dass ein externes Ladegerät ein mit ihm verbundenes Akkupack anhand der über die Datenschnittstelle zur Verfügung gestellten Daten zu identifizieren vermag und hierdurch ein Ladeverfahren bzw. eine Ladekennlinie auswählt, das bzw. die für das vorliegende Akkupack besonders geeignet ist.

Dadurch, dass nunmehr die an der Datenschnittstelle zur Verfügung gestellten Daten konfigurierbar sind, emuliert das Akkupack gegebenenfalls das Vorhandensein eines schwächeren Akkupacks. Das externe Ladegerät nimmt somit ein schwächeres Ackupack wahr und wählt selbstständig ein entsprechendes Ladeverfahren bzw. eine entsprechende Ladekennlinie. Das externe Ladegerät bricht somit einen Ladevorgang beispielsweise früher ab, wodurch das Akkupack nicht vollständig aufladbar ist, obwohl dies hardwareseitig möglich wäre. Schließlich kann das Akkupack beispielsweise relativ gefahrlos und somit unkompliziert transportiert und gelagert werden.

In einer Weiterbildung der Erfindung kann vorgesehen sein, dass das Ladeverfahren ein Konstantspannungs-Ladeverfahren und/oder Konstantstrom-Ladeverfahren, vorzugsweise ein IU-Ladeverfahren oder ein IUoU-Ladeverfahren, ist.

Das IU-Ladeverfahren wird auch als CCCV ("constant current constant voltage")-Ladeverfahren bezeichnet. Es handelt es sich um eine Kombination des Konstantstrom-Ladeverfahrens mit dem Konstantspannungs-Ladeverfahren. Dabei wird das Akkupack zunächst mit einem konstanten Strom geladen; gleichzeitig wird die Ackuspannung am Akkupack kontinuierlich gemessen. Bei Erreichen einer bestimmten Ladeschlussspannung wird von dem Konstantstrom-Ladeverfahren auf das Konstantspannungs-Ladeverfahren umgeschaltet. In dieser zweiten Ladephase wird somit mit konstanter Spannung geladen, wobei der Ladestrom kontinuierlich abfällt. Die Ladeschlussspannung wird üblicherweise derart gewählt, dass das Akkupack bei Erreichen der Ladeschlussspannung bis etwa 80 % seiner Gesamtkapazität geladen ist. Die verbleibenden 20 % des Ladevorgangs erfordern infolge des ab diesem Zeitpunkt stetig absinkenden Ladestroms einen wesentlichen Anteil der Gesamtladedauer.

Bei dem IUoU-Ladeverfahren wird zunächst vorgegangen wie bei dem IU-Ladeverfahren, allerdings wird nach Beendigung der Ladung auf eine sogenannte Erhaltungsladung umgeschaltet, wobei einer Selbstentladung des Akkupacks auch langfristig entgegengewirkt wird, so lange das Akkupack in dem externen Ladegrät verbleibt.

Das IU-Ladeverfahren bzw. das IUoU-Ladeverfahren kann besonders vorteilhaft für das Laden eines Lithium-Ionen-Akkupacks verwendbar sein.

Die Erfindung kann auch für ein Pulsladeverfahren einsetzbar sein, wenn ein für das Pulsladeverfahren geeignetes Akkupack verwendet wird. Grundsätzlich ist die Erfindung in Kombination mit beliebigen Ladeverfahren einsetzbar.

In einer Weiterbildung der Erfindung kann vorgesehen sein, dass es sich bei dem wenigstens einen Akkuladeparameter um eine Nennspannung und/oder eine Ladeschlussspannung und/oder eine Gesamtkapazität handelt.

Insbesondere durch Beeinflussung der Ladeschlussspannung lässt sich üblicherweise der Zeitpunkt festlegen, an dem das externe Ladegerät von einer 80 %-igen Aufladung des Akkupacks ausgeht. Gegebenenfalls kann auch vorgesehen sein, eine Nennspannung zu konfigurieren, wobei das externe Ladegerät über die Nennspannung auf eine "scheinbare" Gesamtkapazität und Ladeschlussspannung schließt. Auch eine direkte Vorgabe der nutzbaren Gesamtkapazität kann vorgesehen sein.

Es kann auch vorgesehen sein, dass das Akkupack eine vollständige Ladekurve an das externe Ladegerät übermittelt, die das Ladegerät anschließend verwendet. Mit einer Ladekurve kann beispielsweise eine Strom-Zeit-Kurve, Spannungs-Zeit-Kurve oder Strom-Spannungs-Kurve gemeint sein.

Schließlich kann vorgesehen sein, dass das Akkupack den Ladevorgang selbst überwacht, beispielsweise durch das Batterie-Management-System, und dem externen Ladegerät eine Ladedauer übermittelt, nach der der Ladevorgang abgebrochen werden soll und/oder ein Signal zum Abbruch des Ladevorgangs übermittelt, wenn ein definierter Ladezustand erreicht wurde, der durch den oder die Akkuladeparameter konfigurierbar ist.

Eine hohe Kompatibilität mit externen Ladegeräten kann ggf. erreicht werden, indem das Akkupack den Ladevorgang selbst überwacht und bei Erreichen eines durch den oder die konfigurierten Akkuladeparameter definierten Ladezustands dem externen Ladegerät ein Fehlersignal übermittelt, wodurch das Ladegerät von einem Fehlerfall ausgeht und den Ladevorgang beendet. Das Akkupack kann hierfür beispielsweise eine zu hohe Temperatur der Akkuzellen vortäuschen.

Es kann vorgesehen sein, den wenigstens einen Akkuladeparameter derart zu konfigurieren, dass das externe Ladegerät den Ladevorgang bis zum Erreichen von beispielsweise 80 % der hardwareseitigen Gesamtkapazität des Akkupacks über ein Konstantstrom-Ladeverfahren vorsieht und anschließend den Ladevorgang möglichst umgehend beendet. Dies kann beispielsweise durch Vorgabe der Akkuladeparameter Nennspannung und Ladeschlussspannung erreicht werden, beispielsweise indem Nennspannung und Ladeschlussspannung auf einen identischen oder annähernd identischen Wert eingestellt werden.

Ein derartiger Ladevorgang, bei dem das Akkupack lediglich auf 80 % der Gesamtkapazität geladen wird, kann von Vorteil sein, da zum einen die Lebensdauer des Akkupacks durch das Aufladen auf lediglich 80 % der Gesamtkapazität erhöht sein kann und das Laden auf 80% durch das Konstantstrom-Ladeverfahren verhältnismäßig schnell möglich ist. Ein Wechsel in eine Konstantspannungs-Ladephase kann somit ggf. entfallen, wenn der/die Akkuladeparameter entsprechend konfiguriert ist bzw. sind.

In einer Weiterbildung der Erfindung kann vorgesehen sein, dass die nutzbare Gesamtkapazität des Akkupacks in mehreren Stufen konfigurierbar ist, vorzugsweise umfassend die Bereiche < 100 Wattstunden und ≥ 100 Wattstunden.

Beispielsweise kann vorgesehen sein, dass die nutzbare Gesamtkapazität des Akkupacks vor einem Transport oder Lagervorgang auf 99 Wattstunden konfiguriert wird. Nach Abschluss des Transport- oder Lagervorgangs, insbesondere vor Inbetriebnahme des Akkupacks, kann der wenigstens eine Akkuladeparameter schließlich derart konfiguriert werden, dass eine nutzbare Gesamtkapazität des Akkupacks von ≥ 100 Wattstunden möglich ist. Die Verwendung einer Grenze von 100 Wattstunden kann von Vorteil sein, da bekanntermaßen ein Transport des Akkupacks mit einer nutzbaren Gesamtkapazität von < 100 Wattstunden verhältnismäßig gefahrlos und somit ohne größere Umstände möglich ist.

In einer Weiterbildung der Erfindung kann vorgesehen sein, dass die Benutzerschnittstelle durch Verschlüsselung und/oder Kodierung und/oder mechanische Mittel und/oder elektrische Mittel zugriffsgeschützt ist.

Es kann vorgesehen sein, dass eine Konfiguration des Akkupacks nur durch den Hersteller, Zulieferer oder einen sonstigen vertrauenswürdigen Personenkreis möglich ist. Somit kann beispielsweise ausgeschlossen werden, dass ein beliebiger Benutzer, also zum Beispiel ein Abnehmer des Akkupacks, eine Konfiguration der Akkuladeparameter vornimmt. Aus wirtschaftlicher Sicht kann es beispielsweise von Vorteil sein, Hochleistungsakkupacks mit einer geringeren als hardwareseitig vorhandenen Gesamtkapazität zu einem geringeren Kaufpreis auf dem Markt verfügbar zu machen, um die Stückzahlen bei der Herstellung zu erhöhen.

Es kann auch vorgesehen sein, weitere Akkupack-Kapazität von einem Fachhandel gegen Aufpreis freischalten zu lassen.

Mit einem mechanischen Mittel zum Zugriffsschutz kann beispielsweise eine Verplombung, Versiegelung oder eine Verbindungstechnik gemeint sein, bei der ein Zugriff nur mit Spezialwerkzeug möglich ist.

In einer Weiterbildung der Erfindung kann vorgesehen sein, dass die Benutzerschnittstelle aus wenigstens einem Jumper und/oder wenigstens einem Schalter und/oder wenigstens einem Dip-Schalter und/oder wenigstens einem Kodierschalter und/oder wenigstens einem Taster und/oder wenigstens einem Pin und/oder einer Programmierschnittstelle und/oder einer drahtlosen Schnittstelle gebildet ist.

Diese Auflistung ist selbstverständlich nicht abschließend. Es können beliebige bewährte Konzepte zur Ausbildung der Benutzerschnittstelle vorgesehen sein.

Insbesondere kann eine Benutzerschnittstelle mit einem oder mehreren Taster(n) vorgesehen sein, über den bzw. über die eine Konfiguration durch ein kodiertes Pulseingabeverfahren (ähnlich einem Morseverfahren) möglich ist. Somit kann z. B. bereits ein einzelner Taster ausreichend sein, um eine große Zahl an möglichen Konfigurationen abzudecken.

Es kann auch vorgesehen sein, dass die Benutzerschnittstelle als einstellbares analoges elektrisches Bauteil ("Trimmer"), z. B. Potentiometer oder variabler Kondensator, ausgebildet ist oder ein derartiges Bauteil umfasst. Es kann somit vorgesehen sein, dass ein oder mehrere Akkuladeparameter analog bzw. stufenlos konfigurierbar ist bzw. sind.

Die Benutzerschnittstelle kann an dem Akkupack an einer geschützten Stelle und/oder schwer zugänglichen Stelle vorgesehen sein. Die Benutzerschnittstelle kann auch innerhalb des Akkupacks angeordnet sein und z. B. erst nach dem Öffnen eines Gehäuseteils des Akkupacks zugänglich werden.

In einer Weiterbildung kann vorgesehen sein, dass die drahtlose Schnittstelle als Bluetooth-Schnittstelle oder WLAN-Schnittstelle oder RFID-Schnittstelle ausgebildet ist.

Über derartige drahtlose Schnittstellen kann eine Konfiguration der Akkuladeparameter äußerst komfortabel erfolgen. Es kann auch eine Kombination mehrerer drahtloser Schnittstellen und/oder mehrerer sonstiger konventioneller Benutzerschnittstellen (vgl. Jumper usw.) vorgesehen sein.

In einer Weiterbildung der Erfindung kann ferner vorgesehen sein, dass die Datenschnittstelle als serielle Schnittstelle ausgebildet ist.

Die Verwendung einer seriellen Schnittstelle kann von Vorteil sein, da die Datenschnittstelle hierdurch kompakt ausgebildet sein kann und beispielsweise eine einzige Signalleitung zur Übertragung der Daten ausreichen kann.

Es kann auch vorgesehen sein, dass die Datenschnittstelle gleichzeitig als Benutzerschnittstelle verwendbar ist.

Es kann außerdem vorgesehen sein, dass eine Konfiguration der Akkuladeparameter durch das externe Ladegerät erfolgt, beispielsweise indem der Benutzer eine Eingabe an dem externen Ladegerät vornimmt, die dann über die Benutzerschnittstelle, mit der das Ladegerät in dieser Weiterbildung verbunden ist, weitergegeben wird.

Ferner kann vorgesehen sein, dass die Datenschnittstelle und/oder die Benutzerschnittstelle mit den elektrischen Anschlüssen des Akkupacks kombiniert ist, beispielsweise derart, dass die Daten durch eine Modulationstechnik über wenigstens eine Versorgungsleitung übertragbar sind.

Es kann vorgesehen sein, dass das Akkupack eine Betriebsspannung von 18 Volt oder 36 Volt liefert. Selbstverständlich kann das Akkupack für beliebige Spannungen und Ströme ausgebildet sein.

Es kann vorgesehen sein, dass das Akkupack für mobile elektrische Geräte verwendbar ist. Es kann auch vorgesehen sein, das das Akkupack in der Automobilbranche, insbesondere als Autobatterie eines Kraftfahrzeugs mit Verbrennungsmotor und/oder als Batterie für ein elektrisch betriebenes Kraftfahrzeug verwendbar ist. Ganz besonders bevorzugt ist das konfigurierbare Akkupack zur Verwendung mit einer Elektrowerkzeugmaschine geeignet.

Grundsätzlich kann das konfigurierbare Akkupack allerdings für beliebige Anwendungen innerhalb der gesamten Elektrotechnik geeignet sein.

Die Erfindung betrifft auch ein Verfahren zur Konfiguration eines Akkupacks, wonach wenigstens ein Akkuladeparameter über eine Eingabe an eine Benutzerschnittstelle des Akkupacks konfiguriert wird, und wonach ein Batterie-Management-System den wenigstens einen Akkuladeparameter an einer Datenschnittstelle des Akkupacks für ein externes Ladegerät zur Verfügung stellt.

Die Erfindung betrifft ferner auch ein System, umfassend ein Akkupack gemäß den vorstehenden und nachfolgenden Ausführungen sowie ein externes Ladegerät für das Akkupack. Für das System ist vorgesehen, dass das externe Ladegerät eine Kennlinie eines Ladeverfahrens und/oder ein Ladeverfahren auf Basis des wenigstens einen Akkuladeparameters festlegt, wobei ein Batterie-Management-System des Akkupacks ausgebildet ist, wenigstens einen Akkuladeparameter an einer gemeinsamen Datenschnittstelle des Akkupacks mit dem externen Ladegerät zur Verfügung zu stellen.

Die Erfindung betrifft außerdem eine vorteilhafte Verwendung eines Akkupacks gemäß den vorstehenden und nachfolgenden Ausführungen mit einer Elektrowerkzeugmaschine.

Merkmale und Vorteile, die bereits für das konfigurierbare Akkupack vorstehend beschrieben wurden, sind selbstverständlich auch auf das Verfahren oder das System übertragbar, sofern dies nicht technisch ausgeschlossen ist.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: ein Schaltungsdiagramm eines erfindungsgemäß konfigurierbaren Ackupacks;
- Figur 2: Beispielhafte Ladekennlinien eines IU-Ladeverfahrens; und
- Figur 3: eine isometrische Darstellung eines erfindungsgemäß konfigurierbaren Akkupacks mit einer Datenschnittstelle und zwei Benutzerschnittstellen.

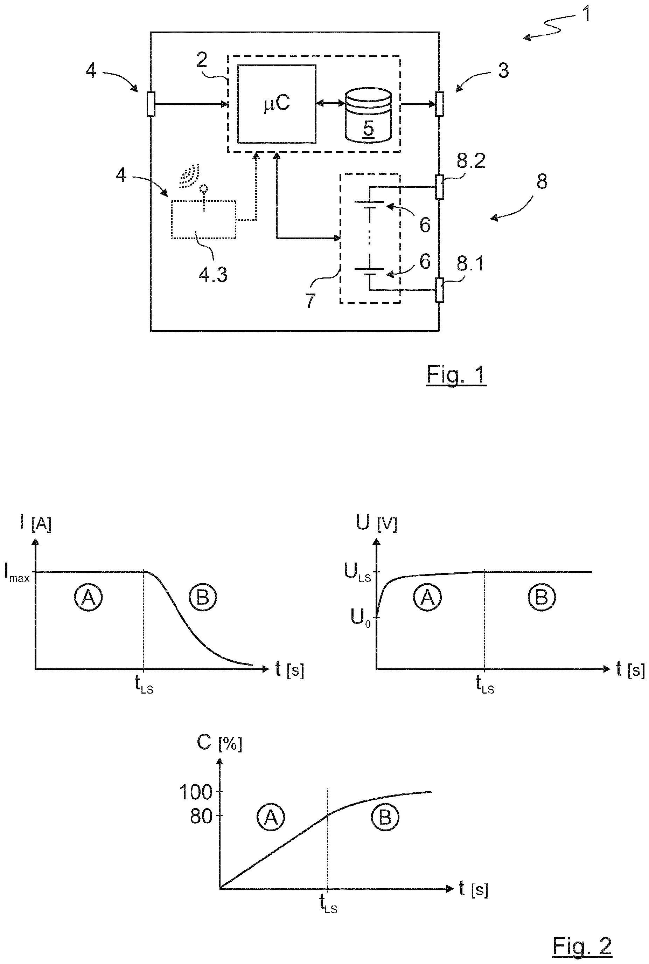

In Figur 1 ist schematisch das Schaltungsdiagramm eines erfindungsgemäßen Akkupacks 1 dargestellt. Das Akkupack 1 umfasst ein integriertes Batterie-Management-System 2 sowie eine Datenschnittstelle 3 und eine Benutzerschnittstelle 4.

Bei dem Batterie-Management-System 2 handelt es sich im Ausführungsbeispiel vorliegend im Wesentlichen um einen Mikrocontroller µC. Das Batterie-Management-System 2 umfasst ferner einen Datenspeicher 5 zum Speichern wenigstens eines Akkuladeparameters. Hierzu ist der Mikrocontroller µC mit dem Datenspeicher 5 zum Lesen und Schreiben von digitalen Daten verbunden. Selbstverständlich kann auch vorgesehen sein, dass ein interner Speicher (nicht dargestellt) des Mikrocontrollers µC verwendbar ist.

Der wenigstens eine Akkuladeparameter wird von dem Batterie-Management-System 2 an der Datenschnittstelle 3 für ein externes Ladegerät (nicht dargestellt) zur Verfügung gestellt. Hierfür kann insbesondere eine serielle digitale Datenschnittstelle 3 vorgesehen sein.

Das externe Ladegerät kann das Akkupack 1 auf Basis der zur Verfügung gestellten Daten identifizieren und vermag somit vorzugsweise ein für das vermeintlich vorliegende Akkupack 1 ideales Ladeverfahren bzw. eine ideale Ladekennlinie auszuführen.

Der wenigstens eine Akkuladeparameter ist über eine Eingabe an die Benutzerschnittstelle 4 konfigurierbar. Es kann dabei vorgesehen sein, dass über die Benutzerschnittstelle 4 der Mikrocontroller µC des Batterie-Management-Systems 2 - oder eine anderweitig ausgebildete Logik des Batterie-Management-Systems 2 - dazu angewiesen wird, den Akkuladeparameter zu modifizieren. Es kann aber auch vorgesehen sein, dass über die Benutzerschnittstelle 4 der wenigstens eine Akkuladeparameter direkt in dem Datenspeicher 5 veränderbar ist.

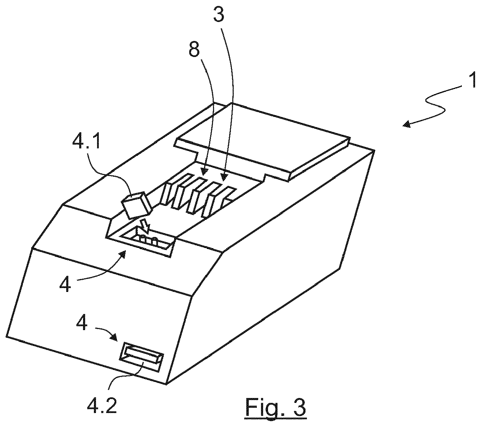

Bei der Benutzerschnittstelle 4 kann es sich beispielsweise um wenigstens einen Jumper 4.1 (vgl. Figur 3) und/oder wenigstens einen Schalter und/oder wenigstens einen Dip-Schalter und/oder wenigstens einen Kodierschalter und/oder wenigstens einen Taster und/oder wenigstens einen Pin und/oder eine Programmierschnittstelle 4.2 (vgl. Figur 3) und/oder eine drahtlose Schnittstelle 4.3 handeln. Auch Kombinationen hieraus sind möglich.

In Figur 1 ist beispielhaft gestrichelt eine drahtlose Schnittstelle 4.3 zusätzlich zu der herkömmlichen Benutzerschnittstelle 4 abgebildet. Bei der drahtlosen Schnittstelle 4.3 kann es sich um eine Bluetooth-Schnittstelle oder WLAN-Schnittstelle oder RFID-Schnittstelle handeln. Das Akkupack 1 kann somit durch eine externe Einrichtung (nicht dargestellt) sogar kabellos konfigurierbar sein. Bei der externen Einrichtung kann es sich beispielsweise auch um einen PC, einen Tabletcomputer oder um ein Smartphone handeln.

Insbesondere kann vorgesehen sein, dass über die Eingabe an die Benutzerschnittstelle 4 eine nutzbare Gesamtkapazität des Akkupacks 1 konfigurierbar ist.

Es kann vorgesehen sein, dass die Akkuladeparameter, die an der Datenschnittstelle 3 zur Verfügung stehen, eine Kennlinie eines Ladeverfahrens eines externen Ladegeräts beeinflussen und/oder das Ladeverfahren festlegen.

Bei dem wenigstens einen Akkuladeparameter kann es sich vorzugsweise um eine Nennspannung und/oder eine Ladeschlussspannung U_{LS} und/oder eine Gesamtkapazität handeln. Vorzugsweise ist hierdurch die nutzbare Gesamtkapazität des Akkupacks 1 in mehreren Stufen konfigurierbar, insbesondere umfassend die Bereiche < 100 Wattstunden und ≥ 100 Wattstunden. Auch eine stufenlose Konfiguration, beispielsweise über eine analoge Benutzerschnittstelle 4 ist möglich.

Das Akkupack 1 umfasst ferner Akkuzellen 6, vorzugsweise eine, zwei, drei oder vier, ggf. auch einhundert oder mehr, die zu einer Reihenschaltung 7 verschaltet sind. Das Akkupack 1 weist eine elektrische Versorgungsschnittstelle 8 umfassend eine Kathode 8.1 und eine Anode 8.2 auf. Über die Versorgungsschnittstelle 8 kann elektrische Energie aus dem Akkupack 1 entnommen oder dem Akkupack 1 zugeführt werden.

Selbstverständlich kann auch vorgesehen sein, dass mehrere Akkuzellen 6 zur Erhöhung der Gesamtkapazität parallel bei gleichbleibender Akkuspannung miteinander verschaltet sind. Insbesondere kann auch eine Gruppenschaltung, also eine Kombination aus Reihenschaltung und Parallelschaltung, vorgesehen sein.

Das Batterie-Management-System 2 kann vorzugsweise auch zur Überwachung und/oder Regelung der Akkuzellen 6, beispielsweise bezüglich einer Betriebstemperatur und einem Ladezustand vorgesehen sein. Insbesondere kann ein sog. Einzelzellenmanagement vorgesehen sein. Das Batterie-Management-System 2 kann hierfür in bekannter Weise verwendet werden. Selbstverständlich kann auch vorgesehen sein, dass ein zusätzliches Batterie-Management-System zur Überwachung der Ackuzellen 6 vorgesehen ist. Das Batterie-Management-System 2 kann für beliebige zusätzliche Aufgaben eingesetzt werden.

Selbstverständlich können auch weitere Schnittstellen an dem Akkupack 1 vorgesehen sein, die vorliegend jedoch nicht dargestellt sind. Beispielsweise kann eine Schnittstelle vorgesehen sein, über die das Akkupack 1 ein Temperatursignal und/oder Fehlersignal übermitteln kann.

In Figur 2 sind schematisch und beispielhaft drei Ladekennlinien I(t), U(t), C(t) eines beispielhaften IU-Ladeverfahrens dargestellt.

Vorzugsweise handelt es sich bei dem Akkupack 1 um ein Lithium-Ionen-Akkupack 1, bei dem in bevorzugter Weise eine Kombination aus Konstantspannungs-Ladeverfahren und Konstantstrom-Ladeverfahren einsetzbar ist.

Bei dem IU-Ladeverfahren wird dabei in einer ersten Phase A des Aufladens das Ackupack 1 mit einem konstanten Ladestrom Iₘₐₓ geladen, bis zum Zeitpunkt t_{LS} eine vordefinierte Ladeschlussspannung U_{LS} erreicht wird. Hierzu wird die Akkuspannung U(t) des Akkupacks 1 während des Ladevorgangs von dem externen Ladegerät überwacht. Bei Erreichen der Ladeschlussspannung U_{LS} wird in eine zweite Ladephase B gewechselt, in der nunmehr die Ladespannung konstant gehalten wird. Ab diesem Zeitpunkt sinkt der Ladestrom I(t) kontinuierlich ab, da die Differenz zwischen Ladespannung und Akkuspannung U(t) mit laufender Ladezeit t sinkt. Während somit in der ersten Ladephase A die geladene Akkukapazität C(t) bzw. die Energiemenge annähernd linear ansteigt, geht die Ladekurve C(t) in der zweiten Ladephase B in ein begrenztes Wachstum über.

Häufig wird die Ladeschlussspannung U_{LS} derart gewählt, dass das externe Ladegerät das Akkupack 1 in der ersten Ladephase A bis etwa 80 % seiner Gesamtkapazität auflädt. Aufgrund der abflachenden Ladekurve nimmt die zweite Ladephase B, in der die letzten 20 % des Akkupacks 1 geladen werden, einen verhältnismäßig großen Zeitanteil in Anspruch. Ferner reduziert ein Laden des Akkupacks 1 auf seine hardwareseitige Gesamtkapazität bei häufigem Laden die Lebensdauer des Akkupacks 1 deutlich. Es kann somit von Vorteil sein, ein Akkupack 1 regelmäßig nur bis zu 80 % seiner Gesamtkapazität aufzuladen.

In einer bevorzugten Ausbildung der Erfindung kann vorgesehen sein, dass der Ackuladeparameter, der über die Benutzerschnittstelle 4 konfigurierbar ist, die Ladeschlussspannung U_{LS} ist. Wie in den Ladekurven I(t), U(t), C(t) der Figur 2 erkennbar, legt die Ladeschlussspannung U_{LS} den Zeitpunkt t_{LS} fest, bei dem von dem Konstantstrom-Ladeverfahren auf das Konstantspannungs-Ladeverfahren umgeschaltet wird. Bei einer Manipulation der Ladeschlussspannung U_{LS} geht das externe Ladegerät somit davon aus, dass die Gesamtkapazität des zur Ladung angeschlossenen Akkupacks 1 geringer ist als dies tatsächlich der Fall ist. Somit würde das externe Ladegerät das Akkupack 1 lediglich bis zu einem gewünschten Ladezustand aufladen, der über die Ladeschlussspannung U_{LS} definierbar ist. Bei einer gleichzeitigen Manipulation eines weiteren Akkuladeparameters, beispielsweise der Nennspannung, kann gegebenenfalls auch erreicht werden, dass das externe Ladegerät den Ladevorgang nach Beendigung der ersten Ladephase A sofort stoppt, ohne in die zweite Ladephase B überzugehen. Dies kann zu einer enormen Zeitersparnis beim Laden führen.

In Figur 3 ist beispielhaft in isometrischer Darstellung ein konfigurierbares Akkupack 1 dargestellt.

Das Akkupack 1 umfasst eine mechanische Kodierung, wodurch es nur mit externen Ladegeräten oder mit zu versorgenden elektrischen Geräten verbindbar ist, die eine entsprechend korrespondierende Kodierung zur Aufnahme des Akkupacks 1 aufweisen. Darstellt ist ferner eine Versorgungsschnittstelle 8, in die auch die Datenschnittstelle 3 integriert ist.

Es sind zwei Beispiele für eine Benutzerschnittstelle 4 dargestellt. Zum einen ist eine Programmierschnittstelle 4.2 in Ausbildung einer USB-Buchse 4.2 an der Frontseite des Akkupacks 1 vorhanden. Über diese Programmierschnittstelle 4.2 kann komfortabel Zugriff auf das Batterie-Management-System 2 bzw. auf den Datenspeicher 5 bzw. auf den wenigstens einen Akkuladeparameter genommen werden.

Es kann vorgesehen sein, dass die Benutzerschnittstelle 4 durch Verschlüsselung und/oder Kodierung und/oder mechanische Mittel und/oder elektrische Mittel zugriffsgeschützt ist.

Im Falle der Programmierschnittstelle 4.2 kann insbesondere eine Verschlüsselung und/oder Kodierung vorgesehen sein. Somit kann beispielsweise nur über einen Zugriffscode auf eine Konfigurationsschnittstelle des Batterie-Management-Systems 2 zugegriffen werden.

Als weiteres Beispiel ist eine Benutzerschnittstelle 4 bestehend aus zwei in dem Ackupack 1 vertieft angeordneten Pins und einem Jumper 4.1 dargestellt. Die Pins (und der eingesetzte Jumper 4.1) sind dabei an einer mechanisch gut geschützten Stelle angebracht.

Es kann beispielsweise vorgesehen sein, dass ein Benutzer durch wahlweises Einsetzen des Jumpers 4.1 eine von zwei Konfigurationen des Akkupacks 1 wählt. Selbstverständlich können auch mehrere Pins und/oder mehrere Jumper vorgesehen sein, wodurch die Anzahl an auswählbaren Konfigurationen größer ist.

Insbesondere kann ein baugleiches Akkupack 1 durch Konfiguration des wenigstens einen Akkuladeparameters in verschiedene Varianten umkonfiguriert werden. Somit kann beispielsweise eine "long-life"-Variante und eine "power"-Variante in den Handel gebracht werden. Es kann auch vorgesehen sein, dass der Benutzer, d. h. vorzugsweise der Endabnehmer, selbst entscheidet, welche Variante er bevorzugt.

## Patentansprüche

1. Konfigurierbares Akkupack (1), umfassend ein integriertes Batterie-Management-System (2) sowie eine Datenschnittstelle (3) und eine Benutzerschnittstelle (4), wobei das Batterie-Management-System (2) einen Datenspeicher (5) zum Speichern wenigstens eines Akkuladeparameters (U_{LS}) aufweist und an der Datenschnittstelle (3) den wenigstens einen Akkuladeparameter (U_{LS}) für ein externes Ladegerät zur Verfügung stellt, und wobei der wenigstens eine Akkuladeparameter (U_{LS}) über eine Eingabe an die Benutzerschnittstelle (4) konfigurierbar ist.

2. Konfigurierbares Akkupack (1) nach Anspruch 1, wobei das Akkupack (1) ein Lithium-Ionen-Akkupack (1) ist, und wobei das Akkupack (1) ausgebildet ist, eine Betriebsspannung von 18 V zu liefern.

3. Konfigurierbares Akkupack (1) nach Anspruch 1 oder 2, wobei die Datenschnittstelle (3) als analoge Datenschnittstelle oder als digitale Datenschnittstelle ausgebildet ist.

4. Konfigurierbares Akkupack (1) nach einem der Ansprüche 1, 2 oder 3, wobei die Akkuladeparameter (U_{LS}), die an der Datenschnittstelle (3) zur Verfügung stehen, eine Kennlinie (I(t), U(t), C(t)) eines Ladeverfahrens beeinflussen.

5. Konfigurierbares Akkupack (1) nach einem der Ansprüche 1 bis 4, wobei es sich bei dem wenigstens einen Akkuladeparameter (U_{LS}) um eine Ladeschlussspannung (U_{LS}) handelt.

6. Konfigurierbares Akkupack (1) nach einem der Ansprüche 1 bis 5, wobei über die Eingabe an die Benutzerschnittstelle (4) eine nutzbare Gesamtkapazität des Akkupacks (1) in mehreren Stufen konfigurierbar ist, vorzugsweise umfassend die Bereiche < 100 Wh und ≥ 100 Wh.

7. Konfigurierbares Akkupack (1) nach einem der Ansprüche 1 bis 6, wobei die Benutzerschnittstelle (4) genau einen Taster aufweist.

8. Konfigurierbares Akkupack (1) nach Anspruch 7, wobei die Benutzerschnittstelle (4) eingerichtet ist, um mögliche Konfigurationen des wenigstens einen Akkuladeparameters (U_{LS}) durch ein kodiertes Pulseingabeverfahren über den Taster zu erfassen.

9. Verfahren zur Konfiguration eines Akkupacks (1), wonach wenigstens ein Akkuladeparameter (U_{LS}) über eine Eingabe an eine Benutzerschnittstelle (4) des Akkupacks (1) konfiguriert wird, und wonach ein Batterie-Management-System (2) den wenigstens einen Akkuladeparameter (U_{LS}) in einem Datenspeicher (5) des Batterie-Management-Systems (2) speichert und an einer Datenschnittstelle (3) des Akkupacks (1) für ein externes Ladegerät zur Verfügung stellt.

10. Verfahren nach Anspruch 9, wobei das Akkupack (1) von einem Benutzer, vorzugsweise einem Endabnehmer, wahlweise als Hochleistungsakkupack oder als langlebiges Akkupack konfiguriert wird.

11. Verfahren nach Anspruch 9 oder 10, wobei das Akkupack (1) über die an der Datenschnittstelle (3) zur Verfügung gestellten, über die Benutzerschnittstelle konfigurierbaren Akkuladeparameter (U_{LS}) gegenüber dem externen Ladegerät das Vorhandensein eines schwächeren Akkupacks (1) emuliert.

12. Verfahren nach einem der Ansprüche 9 bis 11, wobei das Batterie-Management-System (2) den wenigstens einen Akkuladeparameter (U_{LS}) permanent an der Datenschnittstelle (3) zur Verfügung stellt, periodisch zur Verfügung stellt oder auf Anforderung zur Verfügung stellt.

13. Verfahren nach Anspruch 12, wobei das Batterie-Management-System (2) den wenigstens einen Akkuladeparameter (U_{LS}) auf Anforderung des externen Ladegeräts zur Verfügung stellt.

14. System, umfassend ein Akkupack (1) gemäß einem der Ansprüche 1 bis 8 sowie das externe Ladegerät für das Akkupack (1), wobei das externe Ladegerät eine Kennlinie (I(t), U(t), C(t)) eines Ladeverfahrens und/oder ein Ladeverfahren auf Basis des wenigstens einen Akkuladeparameters (U_{LS}) festlegt, der von dem Batterie-Management-System (2) des Akkupacks (1) an der gemeinsamen Datenschnittstelle (3) des Akkupacks (1) zur Verfügung gestellt wird.

15. Verwendung eines Akkupacks (1) gemäß einem der Ansprüche 1 bis 8 mit einer Elektrowerkzeugmaschine.
